# FASCICULE DE BREVET EUROPEEN

(11) **EP 3 715 744 B1**
(45) Date de publication et mention de la délivrance du brevet: **24.11.2021**
(21) Numéro de dépôt: 20166861.3
(22) Date de dépôt: 30.03.2020
(51) Int. Cl.: F24S 20/20, F24S 20/30, F26B 3/28

(54) **USINE SOLAIRE ET PROCÉDÉ DE TRANSFORMATION**
SOLARKRAFTWERK UND UMWANDLUNGSVERFAHREN
SOLAR PLANT AND TRANSFORMATION METHOD

(30) Priorité: 28.03.2019 FR 1903290
(43) Date de publication de la demande: 30.09.2020
(73) Titulaire: FOUR SOLAIRE DEVELOPPEMENT, 66210 Montlouis (FR)
(72) Inventeur: EUDELINE, Denis, 66210 LA LLAGONE (FR)
(74) Mandataire: Rhein, Alain

(56) Documents cités:
- US-A- 4 706 651
- US-A1- 2014 298 822
- US-A1- 2015 307 960
- US-A1- 2015 308 715

## Description

La présente invention entre dans le domaine des énergies renouvelables et plus particulièrement de l'énergie solaire. L'invention se rapporte plus précisément, au domaine de l'énergie solaire concentrée, notamment sous la forme d'usine solaire à simple réflexion. Cette usine solaire peut être appliquée à une industrie requérant de grandes puissances thermiques comprises entre 1 à 100 Mégawatt. Une telle puissance thermique correspond à des températures de transformation industrielle comprise entre 200 et 3500 °C.

L'énergie solaire est gratuite, non polluante et inépuisable. Ces avantages ont conduit au développement de technologies de transformation de l'énergie solaire en énergie électrique et/ou calorifique. De manière générale, le four solaire à double réflexion a été développé à partir de 1949, pour transformer l'énergie solaire concentrée par un système de réflexion optique. Le système de réflexion optique est composé de miroirs concentrant les rayons solaires en énergie thermique à très haute température entre 2000 et 4000 °C ou en électricité. Ce type d'installations était initialement développé pour des applications spéciales et/ou scientifiques.

L'objectif du four solaire est de fournir une alternative à la production d'énergie issue de la combustion de combustibles naturels fossiles. Ces énergies dites fossiles sont de plus en plus chères et polluantes. Le développement des fours solaires peut également contribuer à préserver la ressource en combustible ligneux, permettant une lutte efficace et réelle contre la déforestation.

Actuellement, il est possible de trouver plusieurs types de four solaire, les fours à réflexion simple, ou fours solaires à double réflexion, mais aussi des fours solaires héliothermiques et les centrales solaires photovoltaïques.

De manière générale, un four solaire à double réflexion est composé d'un concentrateur de forme parabolique ou sphérique qui est revêtu de miroirs déformés pour concentrer très fortement, de 2000 à 16000 fois, les rayons solaires. Les rayons solaires sont concentrés vers un point de convergence dénommé foyer optique où l'on obtient des températures très élevées entre 2000 et 4000 °C. Le concentrateur est fixe et insolé toute la journée, par un ou plusieurs héliostats, qui sont des miroirs plans orientables. Les héliostats suivent automatiquement la course du soleil toute la journée.

En parallèle, un four solaire à simple réflexion comporte un ensemble d'héliostats focalisant, qui suivent le soleil toute la journée et réfléchissent, en les concentrant, les rayons solaires vers une chaudière contenant un fluide caloporteur. Le fluide caloporteur peut être stocké ou utilisé en vue de produire de la vapeur dont la pression est utilisée pour actionner une turbine entrainant un alternateur.

Le four solaire à simple réflexion concentre moins les rayons solaires que le four à double réflexion, la température du foyer focal y est par conséquent moins élevée, de l'ordre de 1000 à 2000 °C. Toutefois, les puissances directement liées à la surface de réflexion sont beaucoup plus importantes et peuvent atteindre plusieurs dizaines de Mégawatts.

Le document WO 2014/052902 décrit un premier exemple de four solaire à double réflexion. Le four solaire comprend un ou plusieurs réflecteurs optiques qui sont dans ce document de type héliostat. Les réflecteurs optiques sont organisés et orientés de manière à refléter les rayons solaires incidents vers un concentrateur optique. Le concentrateur optique réoriente les rayons solaires en les reflétant vers un point de convergence.

Le document WO 2014/052902 propose de positionner au niveau du point de convergence des moyens d'absorption d'énergie. Les moyens d'absorption d'énergie peuvent être, d'une part, de type calorifique en utilisant par exemple un système d'échangeur thermique, et/ou, d'autre part, de type électromagnétique en utilisant un élément photovoltaïque. Dans les deux cas, l'objectif est de transformer l'énergie solaire en énergie thermique et/ou électrique.

Un autre exemple tel que le document WO 2015/174236 décrit un four solaire à production d'énergie calorifique à double réflexion. Ce type de four solaire permet de concentrer les rayons solaires en vue de générer de l'énergie calorifique par transfert calorifique. En pratique, les rayons solaires incidents sont reflétés par des réflecteurs optiques en direction d'un concentrateur qui dirige l'ensemble des rayons solaires reflétés en un point de convergence.

Le document WO 2015/174236 positionne au niveau du point de convergence un absorbeur calorifique qui permet d'absorber l'énergie calorifique des rayons solaires reflétés et concentrés. L'énergie calorifique absorbée est transformée en énergie électrique au travers d'un processus complexe impliquant la combustion de gaz combustibles issus de la thermolyse de charbon en vue de produire de la vapeur d'eau actionnant un alternateur électrique via la rotation d'une turbine.

Ces documents utilisent un four solaire pour la production d'énergie électrique ou l'accumulation d'énergie calorifique. A la différence de l'énergie électrique, l'énergie calorifique est plus facilement stockable, par exemple, au travers d'un liquide calorifique qui peut être conservé dans un réservoir isolé thermiquement.

Cependant, l'utilisation directe de l'énergie solaire produite par un four solaire permet d'améliorer le rendement du four solaire. L'énergie solaire peut alors être directement utilisée dans le cadre d'un process industriel.

Selon ce postulat, le document US 4,706,651 décrit une usine solaire qui comprend une chambre de transformation d'une roche calcaire en chaux. L'usine solaire comporte un système de réflexion à simple réflexion. Ce système de réflexion concentre le rayonnement solaire en direction d'une ouverture ménagée dans la chambre de transformation. Le point de convergence est situé au niveau d'un absorbeur calorifique qui est solidaire du plafond de la chambre. Selon ce document, l'absorbeur calorifique est constitué par un tapis roulant confectionné avec de petites pièces d'un matériau réfractaire. Le tapis roulant tourne afin que l'absorbeur calorifique se refroidisse en continu. En parallèle, au bas de la chambre de transformation une vis sans fin fait office de convoyeur et transporte la roche calcaire qui se transforme progressivement en chaux. Il à noter que la transformation de la roche calcaire en chaux ou oxyde de calcium se produit par calcination à une température d'environ 900°C selon la réaction suivante : **CaCO_{3 minéral ou roche}** → **CaO _{solide}** + **CO**_{**2** gaz}

Ainsi, le tapis roulant de l'absorbeur calorifique permet de conserver une température d'environ 900°C.

Le document US 2015/0307960 décrit une autre usine solaire conçue pour le raffinage du magnésium. Le raffinage du magnésium est une réaction de vaporisation du magnésium qui se déroule à une température supérieure à 1107°C. Cette température seuil correspond au point d'ébullition du magnésium. Ici, l'usine solaire comporte un système de concentration des rayons solaires à simple réflexion qui comporte un miroir orientable en fonction de la course du soleil. Cette usine solaire comporte une chambre de transformation équipée d'une ouverture au niveau de laquelle se situe le point de convergence optique. Les briquettes de magnésium sont directement irradiées par les rayons solaires au travers d'une ouverture. En outre, ce document décrit dans un mode de réalisation alternatif, un convoyeur qui amène les briquettes de magnésium dans la chambre de transformation.

Les deux usines solaires connues de l'état de la technique permettent d'extraire un élément d'intérêt, ici de l'oxyde de calcium ou du magnésium, à partir d'une matière première. Or, les usines solaires décrites par ces documents ne permettent pas de réaliser, en continu, la cuisson de matériaux comme la brique, la céramique ou la terre cuite qui nécessitent une montée en température progressive.

Afin de répondre à ce problème technique, la demanderesse a développé une solution technique qui permet d'utiliser directement l'énergie solaire en vue de catalyser ou de réaliser des processus industriels qui impliquent une montée progressive de la température.

A cet effet, la présente invention concerne une usine solaire comprenant :
- un système de réflexion configuré pour réfléchir et orienter des rayons solaires incidents en direction d'au moins un point de convergence,
- des moyens de concentration et de diffusion des rayons solaires réfléchis par le système de réflexion,
- une chambre de transformation, coopérant avec les moyens de concentration et de diffusion, qui diffusent l'énergie calorifique des rayons solaires réfléchis à la chambre de transformation,
- un conduit d'entrée qui s'étend depuis une entrée de l'usine solaire jusqu'à la chambre de transformation,
- un conduit de sortie qui s'étend depuis la chambre de transformation jusqu'à une sortie de l'usine solaire,
- un convoyeur s'étendant depuis l'entrée jusqu'à la sortie en traversant la chambre de transformation, le convoyeur transporte de la matière première depuis l'entrée jusqu'à la sortie, ainsi la matière première passe transitoirement dans la chambre de transformation afin d'obtenir de la matière transformée.

L'usine solaire se caractérise en ce qu'elle comprend au moins un échangeur thermique qui s'étend entre le conduit d'entrée et le conduit de sortie, de manière à transférer, l'énergie calorifique dégagée par la matière transformée au cours de son transit entre la chambre de transformation et la sortie de l'usine solaire, au conduit d'entrée dans lequel transite la matière première avant transformation.

L'échangeur thermique contribue à générer une montée en température progressive au sein du conduit d'entrée à mesure que la matière première s'approche de la chambre de transformation. De plus, l'échangeur thermique fournit une descente progressive en température au fur et à mesure que la matière transformée s'éloigne de la chambre de transformation. Une telle usine solaire permet de réaliser des processus industriels qui requièrent une montée et/ou une descente progressive en température. En ce sens, l'usine solaire selon l'invention permet d'industrialiser, à partir d'énergies renouvelables, des procédés industriels tels que la cuisson de la céramique, la faïence, la brique, la terre cuite etc.

En outre, l'échangeur thermique optimise le rendement énergétique de l'usine solaire en transférant l'énergie calorifique qui se dégage de la matière transformée vers le conduit d'entrée.

De surcroit, l'utilisation directe de l'énergie solaire permet d'améliorer le rendement du four solaire, passant de 20 à 30 % pour la production d'électricité, à 50 % pour le four solaire, et à 70 ou 75 % pour une usine solaire selon l'invention. Il en résulte qu'à puissance égale, une usine solaire présente un système de réflexion moins conséquent qu'un four solaire. Ceci permet de réduire également les coûts d'installation et d'entretien d'une usine solaire par rapport à un four solaire.

Selon une première caractéristique de l'invention, les moyens de concentration et de diffusion comprennent au moins un absorbeur calorifique qui est disposé au niveau du point de convergence, d'une part, l'absorbeur calorifique absorbant l'énergie calorifique des rayons solaires réfléchis, et d'autre part, le au moins un absorbeur calorifique diffuse l'énergie calorifique des rayons solaires réfléchis à la chambre de transformation qui est disposée au contact de le au moins un absorbeur calorifique.

Selon une deuxième caractéristique alternative de la première caractéristique de l'invention, les moyens de concentration et de diffusion comportent au moins une ouverture aménagée dans une paroi de la chambre de transformation, le système de réflexion orientant les rayons solaires réfléchis vers cette ouverture de manière à créer un point de convergence situé au niveau de l'ouverture de la chambre de transformation. Cet agencement permet d'obtenir un cône divergeant qui piège et déconcentre les rayons solaires à l'intérieur de la chambre de transformation. Ceci permet de chauffer l'enceinte de la chambre de transformation tout en évitant de fondre les isolants réfractaires qui tapissent les parois de la chambre de transformation.

Selon une troisième caractéristique, la chambre de transformation comprend au moins un bruleur de gaz. Le bruleur de gaz permet d'ajuster la température régnant dans la chambre de transformation. Cependant, le bruleur permet également de générer une atmosphère réductrice en réduisant l'apport d'air comburant par ajout de carbone. De préférence, le bruleur fonctionne au biogaz. L'usine solaire peut ainsi fonctionner en biénergie 100% renouvelable.

Selon une quatrième caractéristique, l'usine solaire comprend une source de matière première alimentant le convoyeur, la source de matière première est disposée en amont d'une entrée de la chambre de transformation.

Selon une cinquième caractéristique, le système de réflexion comprend au moins un ou plusieurs réflecteur(s) optique(s) et/ou le système de réflexion comprend un ou plusieurs concentrateurs optiques. En particulier, un concentrateur optique peut être composé de plusieurs miroirs focalisant fixés sur une charpente orientable ou fixe.

Selon une sixième caractéristique, l'usine solaire est isolée thermiquement par un revêtement isolant. Le revêtement isolant contribue à optimiser le rendement énergétique de l'usine solaire.

Selon une septième caractéristique, l'usine solaire comporte une succession d'échangeurs thermiques disposés à intervalles réguliers entre la chambre de transformation et la sortie de l'usine solaire. Plus précisément, chaque échangeur thermique s'étendant entre un premier point disposé dans le conduit de sortie et un second point disposé dans le conduit d'entrée.

La présente invention concerne également un procédé de transformation de matière première qui se caractérise en ce qu'il comporte :
- Une étape de réflexion des rayons solaires incidents en direction d'au moins un point de convergence ;
- Une étape de montée en température, d'une chambre de transformation coopérant avec des moyens de concentration et diffusion des rayons solaires réfléchis ;
- Une étape d'acheminement d'une matière première depuis l'extérieur de l'usine solaire vers la chambre de transformation, la matière première étant transportée par l'intermédiaire d'un convoyeur ;
- Une étape de préchauffage progressif de la matière première lors de l'acheminement vers la chambre de transformation ;
- Une étape de transformation de la matière première au sein de la chambre de transformation produisant de la matière transformée ; et
- Une étape d'évacuation de la matière transformée de la chambre de transformation vers l'extérieur de l'usine solaire via le convoyeur.

D'autres particularités et avantages apparaitront dans la description détaillée qui suit, de deux exemples de réalisation, non limitatifs, de l'invention qui sont illustrés par les figures 1 à 3 placées en annexe et dans lesquelles :
[Fig.1] La figure 1 est une représentation d'une usine solaire 1 installée en plaine ;
[Fig.2] La figure 2 est une représentation d'une usine solaire orientée Est-Ouest et installée dans une zone géographique vallonnée ou montagneuse avec une pente plein Sud, recevant les héliostats focalisant ; et
[Fig.3] La figure 3 est une représentation latérale d'une usine solaire orientée Est-Ouest et installée dans une vallée d'une zone tropicale ou intertropicale, les héliostats étant installés sur les pentes Nord et Sud de la vallée.

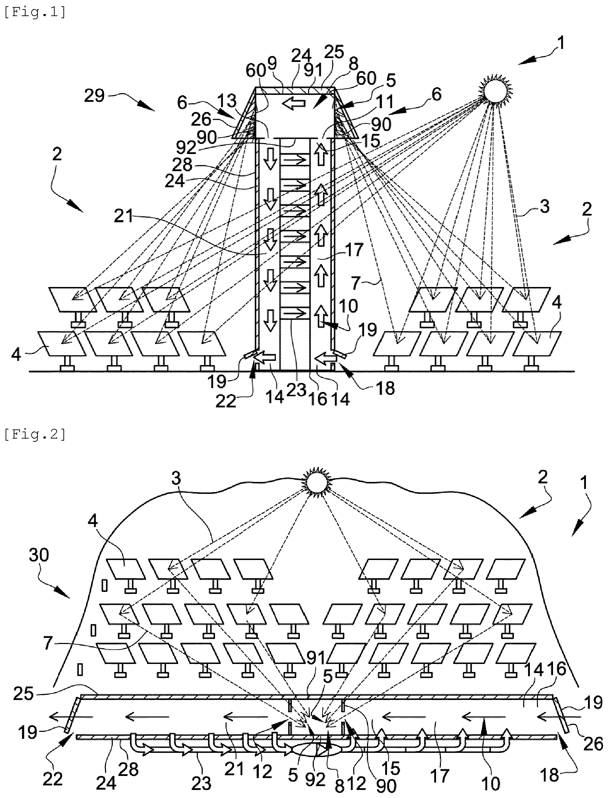

Comme illustrée aux figures 1 à 3, la présente invention concerne une usine solaire 1 qui utilise directement l'énergie solaire en vue de catalyser/ou de réaliser un processus industriel.

Dans cet exemple, l'usine solaire 1 comprend un système de réflexion 2 configuré pour réfléchir, orienter et concentrer les rayons solaires incidents 3.

A cet effet, le système de réflexion 2 comprend au moins un ou plusieurs réflecteur(s) 4 optique(s). Avantageusement, le ou les réflecteur(s) 4 optique(s) peuvent être orientable(s). Cette caractéristique permet de suivre la course du soleil tout au long d'une journée. Le rendement du four solaire 1 peut être ainsi optimisé.

Dans l'exemple des figures 1 à 3, le ou les réflecteur(s) 4 optique(s) sont formés par des héliostats focalisant. Par ailleurs, le système de réflexion 2 peut également intégrer un ou plusieurs concentrateur(s) optique(s). Pour obtenir des températures plus élevées supérieures à 3000 °C. Une telle configuration reprend le concept du four solaire avec des héliostats plans.

Le système de réflexion 2 est configuré pour réfléchir et orienter les rayons solaires incidents 3 en direction d'au moins un point de convergence 5. Dans l'exemple des figures 1 à 3, le système de réflexion 2 est constitué de deux ensembles de réflecteurs 4. Chaque ensemble de réflecteurs 4 réfléchit respectivement les rayons solaires incidents 3 en direction d'un point de convergence 5 identique ou de deux points de convergence 5 distincts.

Il est connu de l'homme du métier que le point de convergence 5 d'un système de réflexion 2 constitue un foyer focal de dimensions définies. Le foyer focal peut comprendre des températures comprises entre 1000°C et 3500°C.

Ici, le ou les réflecteur(s) 4 optique(s) sont orientés de manière à réfléchir les rayons solaires incidents 3 en direction du point de convergence 5.

L'usine solaire 1 comprend des moyens de concentration et de diffusion 6 des rayons solaires réfléchis 7 par le système de réflexion 2. La chambre de transformation 8 coopère avec les moyens de concentration et de diffusion 6 qui diffusent l'énergie calorifique des rayons solaires réfléchis 7 à la chambre de transformation 8.

Selon une première alternative, les moyens de concentration et de diffusion 6 comprennent au moins un absorbeur calorifique 60 disposé de manière à recevoir les rayons solaires réfléchis 7 par le système de réflexion 2. Dans cette optique, le au moins un absorbeur calorifique 60 est disposé au niveau du point de convergence 5. Ainsi, le au moins un absorbeur calorifique 60, absorbe l'énergie calorifique des rayons solaires réfléchis 7 par le système de réflexion 2. L'absorbeur calorifique 60 peut être réalisé dans un matériau réfractaire tel que le carbure de silicium. Le matériau réfractaire présente également des propriétés de conducteur de la chaleur. L'absorbeur calorifique 60 permet d'absorber l'énergie calorifique des rayons solaires réfléchis 7.

Comme illustrée aux figures 1 à 3, l'usine solaire 1 comprend une chambre de transformation 8. La chambre de transformation 8 est délimitée par des parois 9. Dans cet exemple, les parois 9 délimitent une chambre de transformation 8 de forme quadrangulaire.

Ainsi, la chambre de transformation 8 comporte quatre parois latérales 90 parallèles deux à deux. En outre, la chambre de transformation 8 comprend également une paroi supérieure 91 perpendiculaire aux parois latérales 90. La paroi supérieure 91 est également parallèle d'une paroi inférieure 92.

Toutefois, la chambre de transformation 8 peut prendre diverses formes tridimensionnelles telles qu'une forme cylindrique, pyramidale etc.

La disposition de la chambre de transformation 8 est déterminée en fonction de l'organisation du système de réflexion 2. Comme illustrée aux figures 1 à 3, la chambre de transformation 8 peut reposer sur le sol ou être disposée à une hauteur déterminée du sol. En particulier, la disposition de la chambre de transformation 8 est liée à la position du ou des point(s) de convergence(s) 5.

La chambre de transformation 8 contribue à utiliser directement l'énergie solaire en vue de catalyser ou de réaliser un processus industriel. A cet effet, la chambre de transformation 8 est placée au contact d'au moins un absorbeur calorifique 60. Dans le présent exemple, au moins une paroi 9, 90, 91, 92 de la chambre de transformation 8 est recouverte au moins partiellement par un absorbeur calorifique 60. Selon cette configuration, l'absorbeur calorifique 60 se présente sous la forme d'un panneau recouvrant au moins partiellement une paroi 9, 90, 91, 92 de la chambre de transformation 8.

De préférence et comme illustrées aux figures 1 à 3, au moins deux parois latérales 90 sont au moins partiellement recouvertes par un absorbeur calorifique 60. De préférence, les parois latérales 90 intègrent au moins partiellement un absorbeur calorifique 60.

En pratique, la disposition d'un ou de plusieurs absorbeur(s) calorifique(s) 6 dépend du nombre de parois 9, 90, 91, 92 de la chambre calorifique 8 exposées aux rayons solaires réfléchis 7.

De manière générale, la chambre de transformation 8 est délimitée par des parois 9, 90, 91, 92 qui sont réalisées au moins en partie dans un matériau conducteur de chaleur. Ainsi, l'énergie calorifique captée par le au moins un absorbeur calorifique 60 est transférée à la chambre de transformation 8. Ce transfert d'énergie calorifique entraine une montée en température de la chambre de transformation 8. La chambre de transformation 8 est assimilable à « un four à énergie solaire ».

Selon une seconde alternative, les moyens de concentration et de diffusion 6 comportent au moins une ouverture. La, au moins une ouverture est ménagée dans une paroi 9, 90, 91, 92 de la chambre de transformation 8. De préférence, les moyens de concentration et de diffusion 6 comportent au moins deux ouvertures ménagées respectivement dans deux parois 9, 90, 91, 92 opposées l'une de l'autre. En particulier, la au moins une ouverture est disposée en partie basse d'une paroi 9, 90, 91, 92 de la chambre de transformation 8.

Selon cette alternative, le système de réflexion 2 oriente les rayons solaires réfléchis 7 en direction de la, au moins une ouverture. Les rayons solaires réfléchis 7 pénètrent ainsi dans l'enceinte de la chambre de transformation 8 et créent un point de convergence 5 au niveau de l'ouverture. Les dimensions de l'ouverture correspondent aux dimensions du foyer focal. Dans cette configuration, le point de convergence 5 crée un cône de divergence optique qui déconcentre et diffuse la lumière au sein de la chambre de transformation 8.

L'usine solaire 1 peut être équipée sans modifications structurelles de l'une des deux alternatives de mise en œuvre des moyens de concentration et de diffusion 6.

Avantageusement, la chambre de transformation 8 comprend au moins un bruleur de gaz. De préférence, la chambre de transformation 8 comprend au moins un bruleur de biogaz. Le, au moins un brûleur de gaz contribue à ajuster la température régnant dans la chambre de transformation 8. Bien entendu, le bruleur de gaz est alimenté via un système d'alimentation en gaz. Le, au moins un bruleur de gaz peut être manuel, semi-automatique ou automatique. Lorsque le bruleur est automatique, il peut être contrôlé par les moyens de gestion. L'usine solaire 1 fonctionne alors en biénergie totalement renouvelables.

La chambre de transformation 8 peut également comprendre un capteur de température relié aux moyens de gestion. Ainsi, lorsqu'un passage nuageux diminue l'apport en rayon solaire, le, au moins un bruleur peut être utilisé pour ajuster la température de la chambre de transformation 8.

Afin de produire de nuit, il n'est pas exclu que le, au moins un bruleur puisse maintenir la chambre de transformation 8 à une température déterminée.

L'usine solaire 1 possède en outre un convoyeur 10. Le convoyeur 10 est schématisé par des flèches au travers des conduits 14, 17, 21 (figure 1 et 2). Le convoyeur 10 assure le transport de matière première depuis l'extérieur du l'usine solaire 1 jusqu'à la chambre de transformation 8.

Dans cet exemple, le convoyeur 10 est disposé traversant de la chambre de transformation 8. En premier lieu, le convoyeur 10 pénètre dans la chambre de transformation 8 au travers d'une entrée 11. L'entrée 11 de la chambre de transformation 8 peut comprendre des moyens de fermeture 12. A titre d'exemple, les moyens de fermeture 12 peuvent être formés par une porte, un sas etc.

En second lieu, le convoyeur 10 sort de la chambre de transformation 8 via une sortie 13. De la même manière, la sortie 13 de la chambre de transformation 8 peut comprendre des moyens de fermeture 12. Les moyens de fermeture 12 peuvent être formés par une porte, un sas etc. De manière générale, les moyens de fermeture 12 peuvent être actionnés manuellement ou contrôlés par les moyens de gestion.

L'entrée 11 et la sortie 13 de la chambre de transformation 8 peuvent être disposées sur une même paroi 9, 90, 91, 92 de la chambre de transformation 8. Cependant, il est aussi possible de disposer respectivement l'entrée 11 et la sortie 13 de la chambre de transformation 8 sur deux parois 9, 90, 91, 92 distinctes.

Ainsi, le convoyeur 10 fait passer transitoirement la matière première au sein de la chambre de transformation 8. De préférence, le temps de passage de la matière première dans la chambre de transformation 8 est défini. Le temps de passage de la matière première est défini selon la nature de la matière première et la nature de la transformation que l'on souhaite obtenir. Avantageusement, le fait de contrôler le temps de passage de la matière première dans la chambre de transformation 8 permet d'industrialiser un processus de transformation de matière première.

La transformation de matière peut correspondre à un changement d'état physique telles que la fusion d'un solide, ou à l'inverse la solidification d'un matériau ductile ou cru telle que la cuisson de la céramique, la terre cuite, la brique, la faïence. A titre d'exemple, la cuisson de la faïence peut être inférieure à 2 heures à 1000 °C. Ces matériaux ductiles crus ont la particularité de nécessiter une montée en température progressive pour éviter un craquèlement ou une rupture de la matière ou de l'objet que l'on souhaite cuire.

Il est à noter que le convoyeur 10 peut être formé par tout système mécanique, automatique ou semi-automatique qui permet d'assurer le transport de matière première. A titre indicatif, le convoyeur 10 peut être formé par des wagonnets montés sur rails. Les wagonnets et les rails peuvent être réfractaires. Dans ce cas, les rails sont montés traversant de la chambre de transformation 8.

Par ailleurs, afin de contrôler le temps de passage de la matière première dans la chambre de transformation 8, l'usine solaire 1 peut comprendre des moyens de gestion automatique de l'actionnement du convoyeur 10.

Les moyens de gestion peuvent être formés par un ordinateur possédant un microprocesseur et une mémoire. Le microprocesseur est alors configuré pour exécuter un programme de cuisson stocké dans la mémoire. Le programme de cuisson peut être paramétrable par un utilisateur au travers d'une interface classique.

La durée d'exposition à la chaleur de la matière première dans la chambre de transformation 8 dépend de la température qui règne dans la chambre de transformation 8 et de la vitesse du convoyeur 10. La température de la chambre de transformation 8 dépend, quant à elle, de plusieurs facteurs tels que le taux de concentration des rayons solaires réfléchis, le coefficient d'absorption de la matière première etc.

Le convoyeur 10 peut être alimenté en énergie par une source d'énergie électrique. L'énergie électrique peut provenir d'une source d'énergie électrique renouvelable telle que des photopiles ou un réseau de distribution électrique.

Comme illustrée aux figures 1 à 3, l'usine solaire 1 comprend au moins un conduit 14. Le, au moins un conduit 14 s'étend entre deux extrémités 15, 16. Dans cet exemple, le, au moins un conduit 14 s'étend d'une première extrémité 15 raccordée à la chambre de transformation 8 en direction d'une seconde extrémité libre 16. De préférence, l'usine solaire 1 possède deux conduits 14.

Un premier conduit 14 est raccordé à l'entrée 11 de la chambre de transformation 8. Ce premier conduit 14 est défini comme un conduit d'entrée 17 de l'usine solaire 1. L'extrémité libre 16 du conduit d'entrée 17 correspond à l'entrée 18 de l'usine solaire 1. L'entrée 18 de l'usine solaire 1 comprend un organe de fermeture 19. A titre indicatif, l'organe de fermeture 19 peut être formé par une porte d'ouverture, un sas etc. L'organe de fermeture 19 peut être automatique, semi-automatique ou manuel. Lorsque l'organe de fermeture 19 est automatique il peut être contrôlé par les moyens de gestion.

Par ailleurs, un second conduit 14 est raccordé à la sortie 13 de la chambre de transformation 8. Le second conduit 14 est défini comme un conduit de sortie 21 de l'usine solaire 1. L'extrémité libre 16 du conduit de sortie 21 correspond à la sortie 22 de l'usine solaire 1.

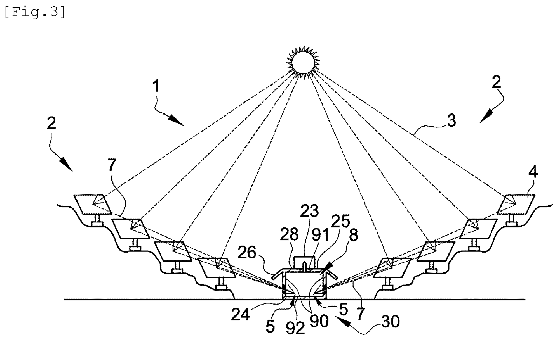

Il est à noter que le conduit d'entrée 18 et le conduit de sortie 21 peuvent être agencés de différentes façons. Les conduits peuvent s'étendre dans un même plan et/ou selon une même direction. Le plan dans lequel s'étendent les deux conduits 14, 17, 21 peut prendre plusieurs orientations. Par exemple, aux figures 2 et 3, les deux conduits 14, 17, 21 sont disposés en ligne selon un plan parallèle au sol. Cependant, les deux conduits 14, 17, 21 peuvent être également disposés dans un même plan et/ou selon un agencement en aller et retour. Dans la figure 1, les deux conduits 14, 17, 21 sont disposés en aller et retour selon un plan perpendiculaire au sol.

Le convoyeur 10 s'étend au travers d'au moins un conduit 14, 17, 21 depuis l'extérieur du four solaire 1 jusqu'à la chambre de transformation 8.

Dans cet exemple, le convoyeur 10 s'étend depuis l'entrée 18 de l'usine solaire 1 jusqu'à la sortie 22 du four solaire 1 en traversant la chambre de transformation 8. Ainsi, le convoyeur 10 traverse successivement le conduit d'entrée 17, la chambre de transformation 8 et le conduit de sortie 21.

L'usine solaire 1 comprend une source de matière première alimentant le convoyeur 10. La source de matière première est disposée en amont de l'entrée 11 de la chambre de transformation 8. De préférence, la source de matière première est disposée en amont de l'entrée 18 de l'usine solaire 1.

La source de matière première peut être automatique, semi-automatique ou manuelle. Dans ce dernier cas, un opérateur chargera au fur et à mesure le convoyeur 10 de matière première.

Par ailleurs, en aval de la chambre de transformation 8 et de préférence en aval du conduit de sortie 21, l'usine solaire 1 comprend une zone de déchargement de la matière transformée. Le déchargement du convoyeur 10 peut être réalisé soit manuellement soit à l'aide d'un système automatique ou semi-automatique.

Avantageusement, l'usine solaire 1 est équipée d'au moins un échangeur thermique 23. Comme illustré aux figures 1 à 3, le au moins un échangeur thermique 23 s'étend entre le conduit d'entrée 17 et le conduit de sortie 21. En pratique, le au moins un échangeur thermique 23 permet de transférer, un surplus d'énergie calorifique emmagasiné par la matière transformée lors de son passage dans la chambre de transformation 8, vers le conduit d'entrée 17 dans lequel transite de la matière non transformée. En effet, en sortie de la chambre de transformation 8, ce surplus d'énergie calorifique est libéré sous forme de chaleur par la matière transformée et constitue une source d'énergie calorifique.

Dans cet exemple, l'usine solaire 1 comporte une succession d'échangeurs thermiques 23 disposés à intervalles réguliers entre la chambre de transformation 8 et la sortie 22 de l'usine solaire 1. Chaque échangeur thermique 23 s'étend entre un premier point disposé dans le conduit de sortie 21 et un second point disposé dans le conduit d'entrée 17.

De préférence, le premier et le second point sont équidistants de la chambre de transformation 8. Cette configuration spécifique contribue à fournir, au niveau du conduit d'entrée 17, une montée en température progressive depuis l'entrée du four solaire 18 jusqu'à la chambre de transformation 8.

Il est à noter que l'échangeur thermique 23 peut être de type air-air ou encore de type air-eau ou autre. Dans le cas d'un échangeur thermique 23 de type air-air, celui-ci peut être couplé avec un système de ventilation/aspiration. L'échangeur thermique 23 peut être activé ou désactivé en fonction notamment de la nature de la matière première et/ou du type de transformation que l'on souhaite obtenir.

A cet effet, les moyens de gestion peuvent être utilisés au travers de leur interface pour commander le fonctionnement de l'échangeur thermique 23.

L'usine 1 est isolée thermiquement au travers d'un revêtement d'isolation 24 qui recouvre au moins partiellement la chambre de transformation 8.

Le revêtement d'isolation 24 recouvre également au moins partiellement le au moins un conduit 14, 17, 21. De préférence, le revêtement d'isolation 24 recouvre entièrement le conduit d'entrée 17 et le conduit de sortie 21.

Dans cet exemple, il est préférable d'utiliser un matériau isolant réfractaire et encore préférentiellement, un matériau isolant réfractaire haute température. Ceci est particulièrement avantageux à l'intérieur et à proximité de la chambre de transformation 8.

Le revêtement d'isolation 24 réduit les déperdissions d'énergie calorifique et permet d'optimiser le rendement calorifique de l'usine solaire 1.

Il est à noter que les parois 9, 90, 91, 92 peuvent également être recouvertes intérieurement d'un revêtement isolant réfractaire. Ceci favorise la montée en température de la chambre de transformation 8. De surcroît, les parois 9, 90, 91, 92 recouvertes intérieurement d'un revêtement isolant réfractaire participe à limiter les déperdissions thermiques.

Également dans l'objectif d'isoler l'usine solaire 1, la chambre de transformation 8 peut être équipée d'une toiture 25. La toiture 25 comporte une extension saillante 26. De préférence, l'extension saillante 26 s'étend, depuis la paroi supérieure 91, sur le pourtour de la chambre de transformation 8. Avantageusement, l'extension saillante 26 comporte sur sa face interne un revêtement isolant 24 tel que décrit précédemment. De préférence, le revêtement isolant 24 est de type réfractaire. Avantageusement, le revêtement isolant 24 réfractaire permet de réduire les pertes d'énergie calorifique non absorbée par l'absorbeur calorifique 6.

La toiture 25 comprend, par ailleurs, un revêtement externe 28 de type bardage tel que décrit précédemment.

Dans l'exemple illustré aux figures 1 à 3, le four solaire 1 comporte un bardage 28. Le bardage 28 recouvre et protège le revêtement d'isolation 24 des dégradations extérieures dues, par exemple, aux intempéries. De préférence, le bardage 28 est réalisé en métal tel que l'inox. A titre indicatif, il est possible d'utiliser des panneaux de tôle en inox pour réaliser le bardage 28 de l'usine solaire 1.

Il est bien connu de la littérature scientifique que l'orientation des rayons solaires incidents 3 varie en fonction de la situation géographique et de la topographie d'une région.

La figure 1 illustre une usine solaire 1 conforme à l'invention qui est configurée de manière à être utilisée en plaine. Ainsi selon la spécificité de la région et de la topographie, l'usine solaire 1 se présente sous la forme d'une tour 29 verticale entourée par au moins deux ensembles de réflecteurs 4. La chambre de transformation 8 est disposée au sommet de la tour 29.

Ici, les deux ensembles de réflecteurs 4 sont orientés afin de réfléchir respectivement les rayons solaires incidents 3 en direction de deux points de convergence 5 distincts. Chaque point de convergence 5 est disposé au niveau d'une paroi latérale 90 distincte de la chambre de transformation 8.

Selon cet exemple de réalisation, l'usine solaire 1 comporte deux conduits 14, 17, 21. Le conduit d'entrée 17 et le conduit de sortie 21 de l'usine solaire 1 sont disposés dans le même plan et selon un agencement en aller-retour vertical.

L'usine solaire 1 de la figure 2, présente une configuration spécifique d'une région montagneuse ou vallonée située au sud de l'Europe. Ici, l'usine solaire 1 se présente sous la forme d'un tunnel 30 en ligne, parallèle au sol et orienté Est-Ouest, reposant sur le sol. Le tunnel 30 comporte en son centre la chambre de transformation 8. Le conduit d'entrée 17 et le conduit de sortie 21 sont disposés en ligne de part et d'autre de la chambre de transformation 8.

Il est à noter que dans cet exemple, le système de réflexion 2 comprend un ou plusieurs ensembles de réflecteurs 4 qui sont disposés en espalier sur une pente orientée plein Sud dans l'hémisphère Nord. A l'inverse, si l'usine solaire 1 était installée dans l'hémisphère Sud, la pente, sur laquelle sont disposés les réflecteurs, serait orientée plein Nord. Les ensembles de réflecteurs 4 sont orientés automatiquement afin de réfléchir les rayons solaires incidents 3 en direction d'un même point de convergence 5.

L'usine solaire 1 de la figure 3 illustre quant à elle une configuration spécifique d'une vallée d'une zone montagneuse ou vallonée située en zone tropicale ou intertropicale. La vallée est ici orientée Est-Ouest. Selon cette configuration, l'usine solaire 1 se présente également sous la forme d'un tunnel 30 reposant au sol. Par ailleurs, le système de réflexion 2 comporte deux ensembles de réflecteurs 4 disposés respectivement en espalier sur deux pentes se faisant face.

Les deux ensembles de réflecteurs 4 sont orientés de manière à réfléchir respectivement les rayons solaires incidents 3 en direction de deux points de convergence 5 distincts. Plus précisément, dans cet exemple les deux points de convergence 5 sont disposés au niveau de deux parois latérales 90 opposées, et situées en partie basse de la chambre de transformation 8.

Bien entendu, en fonction de la situation géographique et topographique du site d'installation de l'usine solaire 1, celle-ci peut être agencée différemment tout en conservant les caractéristiques que nous venons de décrire.

D'autre part, la présente invention concerne également un procédé de transformation de matière première, utilisant une usine solaire 1. Le procédé comprend une étape de réflexion des rayons solaires incidents 3 en direction d'au moins un point de convergence 5. Cette orientation contribue à optimiser l'accumulation d'énergie solaire calorifique dont la source est gratuite, non polluante et inépuisable.

Le procédé de transformation possède une étape de montée en température de la chambre de transformation 8. La montée en température de la chambre de transformation 8 résulte de sa coopération avec les moyens de concentration et de diffusion 6 de l'usine solaire 1.

Le procédé comporte également une étape d'acheminement de la matière première. La matière première est acheminée depuis l'extérieur du four solaire 1 vers la chambre de transformation 8. Ici, la matière première est transportée par l'intermédiaire d'un convoyeur 10.

Le procédé comporte une étape de préchauffage progressif de la matière première lors de l'acheminement vers la chambre de transformation 8. Cette étape est réalisée à l'aide du ou des échangeur(s) thermique(s) 23 qui s'étend(ent) entre le conduit d'entrée 17 et le conduit de sortie 18. Le préchauffage progressif est opéré par un transfert de chaleur depuis la matière transformée vers la matière à transformer comme décrit précédemment.

Le procédé comprend une étape de transformation de la matière première. Cette étape se déroule au sein de la chambre de transformation 8 à une température définie. La matière première est transformée par cuisson, fusion, réaction thermique ou photo thermique, ou thermo-catalyse, etc... Comme évoqué précédemment, la transformation de la matière première peut résider en un changement d'état physique ou dans la thermo-catalyse d'une réaction chimique telle qu'une réaction de polymérisation et/ou de réticulation.

Le procédé de transformation peut comprendre une étape d'ajustement de la température de la chambre de transformation 8. Cette étape d'ajustement est réalisée en faisant varier le nombre d'héliostats, ou à l'aide du bruleur de gaz. Ce dernier permet de compenser une perte d'apport en rayons solaires incidents due par exemple à un passage nuageux.

Le procédé de transformation peut comprendre une étape de création d'une atmosphère réductrice. Cette étape peut être réalisée par ajout de biogaz au sein de l'enceinte de la chambre de transformation 8. L'ajout de biogaz réduit l'apport d'air dans l'enceinte de la chambre de transformation 8 et permet de faire de la réduction de la matière première. L'ajout de biogaz peut être réalisé par un bruleur.

Le procédé de transformation comprend une étape d'évacuation de la matière transformée. La matière transformée est alors évacuée depuis la chambre de transformation 8 vers l'extérieur de l'usine solaire 1. Comme décrit précédemment, l'évacuation de la matière première est effectuée par le convoyeur 10.

Il est à noter que l'usine solaire 1 peut être intégrée à une chaine de production industrielle. En sortie de l'usine solaire 1, la matière transformée peut subir de nouvelles modifications opérées par d'autres outils de production et/ou de transformation.

Dans ce cas de figure, l'usine solaire 1 permet avantageusement de catalyser ou de réaliser une étape de transformation d'une matière première ou d'une matière pré-transformée ou encore d'une matière précurseur.

## Revendications

1. Usine solaire (1) comprenant :
- un système de réflexion (2) configuré pour réfléchir et orienter des rayons solaires incidents (3) en direction d'au moins un point de convergence (5),
- des moyens de concentration et de diffusion (6) des rayons solaires réfléchis (7) par le système de réflexion (2),
- une chambre de transformation (8) coopérant avec les moyens de concentration et de diffusion (6) qui diffusent l'énergie calorifique des rayons solaires réfléchis (7) à la chambre de transformation (8),
- un conduit d'entrée (17) qui s'étend depuis une entrée (18) de l'usine solaire (1) jusqu'à la chambre de transformation (8),
- un conduit de sortie (21) qui s'étend depuis la chambre de transformation (8) jusqu'à une sortie (22) de l'usine solaire (1),
- un convoyeur (10) s'étendant depuis l'entrée (18) jusqu'à la sortie (22) en traversant la chambre de transformation (8), le convoyeur (10) transporte de la matière première depuis l'entrée (18) jusqu'à la sortie (22), ainsi la matière première passe transitoirement dans la chambre de transformation (8) afin d'obtenir de la matière transformée,
**caractérisée en ce qu'**elle comprend au moins un échangeur thermique (23) qui s'étend entre le conduit d'entrée (18) et le conduit de sortie (21), de manière à transférer, l'énergie calorifique dégagée par la matière transformée au cours de son transit entre la chambre de transformation (8) et la sortie (22) de l'usine solaire (1), au conduit d'entrée (18) dans lequel transite la matière première avant transformation.

2. Usine solaire (1) selon la revendication 1, **caractérisée en ce que** les moyens de concentration et de diffusion (6) comprennent au moins un absorbeur calorifique (60) qui est disposé au niveau du point de convergence (5), d'une part, l'absorbeur calorifique (60) absorbant l'énergie calorifique des rayons solaires réfléchis (7), et d'autre part, le au moins un absorbeur calorifique (60) diffuse l'énergie calorifique des rayons solaires réfléchis (7) à la chambre de transformation (8) qui est disposée au contact de le au moins un absorbeur calorifique (60).

3. Usine solaire (1) selon la revendication 1, **caractérisée en ce que** les moyens de concentration et de diffusion (6) comportent au moins une ouverture ménagée dans une paroi (9, 90, 91, 92) de la chambre de transformation (8), le système de réflexion (2) orientant les rayons solaires réfléchis (7) vers cette ouverture de manière à créer un point de convergence (5) situé au niveau de l'ouverture de la chambre de transformation (8).

4. Usine solaire (1), selon l'une des revendications 1 à 3, **caractérisée en ce que** la chambre de transformation (8) comprend au moins un bruleur de gaz.

5. Usine solaire (1) selon l'une des revendications 1 à 4, **caractérisée en ce qu'**elle comprend une source de matière première alimentant le convoyeur, la source de matière première est disposée en amont d'une entrée (11) de la chambre de transformation (8).

6. Usine solaire (1) selon l'une des revendications 1 à 5, **caractérisée en ce que**, le système de réflexion (2) comprend au moins un ou plusieurs réflecteur(s) optique(s) (4) et/ou le système de réflexion (2) comprend un ou plusieurs concentrateurs optiques.

7. Usine solaire (1) selon l'une des revendications 1 à 6, **caractérisée en ce qu'**elle est isolée thermiquement par un revêtement isolant (24).

8. Usine solaire (1) selon l'une des revendications 1 à 7, **caractérisée en ce qu'**elle comporte une succession d'échangeurs thermiques (23) disposés à intervalles réguliers entre la chambre de transformation (8) et la sortie (22) de l'usine solaire (1).

9. Usine solaire (1) selon la revendication 8, chaque échangeur thermique (23) s'étendant entre un premier point disposé dans le conduit de sortie (21) et un second point disposé dans le conduit d'entrée (17).

10. Procédé de transformation de matière première utilisant une usine solaire (1) défini selon l'une des revendications 1 à 9, **caractérisé en ce qu'**il comporte :
- une étape de réflexion des rayons solaires incidents en direction d'au moins un point de convergence (5) ;
- une étape de montée en température d'une chambre de transformation (8) coopérant avec des moyens de concentration et diffusion (6) des rayons solaires réfléchis (7) ;
- une étape d'acheminement d'une matière première depuis l'extérieur de l'usine solaire (1) vers la chambre de transformation (8), la matière première étant transportée par l'intermédiaire d'un convoyeur (10) ;
- une étape de préchauffage progressif de la matière première lors de l'acheminement vers la chambre de transformation (8) ;
- une étape de transformation de la matière première au sein de la chambre de transformation produisant de la matière transformée ; et
- une étape d'évacuation de la matière transformée de la chambre de transformation (8) vers l'extérieur du four solaire (21) via le convoyeur (10).

## Patentansprüche

1. Solaranlage (1), umfassend:
- ein Reflexionssystem (2), das konfiguriert ist, um einfallende Sonnenstrahlen (3) zu reflektieren und auf mindestens einen Konvergenzpunkt (5) zu richten,
- Mittel zum Konzentrieren und Diffundieren (6) der von dem Reflexionssystem (2) reflektierten Sonnenstrahlen (7),
- eine Verarbeitungskammer (8), die mit den Mitteln zum Konzentrieren und Diffundieren (6) zusammenwirkt, die die Wärmeenergie der reflektierten Sonnenstrahlen (7) in die Verarbeitungskammer (8) diffundieren,
- einen Einlasskanal (17), der sich von einem Einlass (18) der Solaranlage (1) zur Verarbeitungskammer (8) erstreckt,
- einen Auslasskanal (21), der sich von der Verarbeitungskammer (8) zu einem Auslass (22) der Solaranlage (1) erstreckt,
- einen Förderer (10), der sich von dem Einlass (18) zu dem Auslass (22) durch die Verarbeitungskammer (8) erstreckt, wobei der Förderer (10) Rohmaterial von dem Einlass (18) zu dem Auslass (22) transportiert, wodurch das Rohmaterial vorübergehend die Verarbeitungskammer (8) durchläuft, um verarbeitetes Material zu erhalten,
**dadurch gekennzeichnet, dass** sie mindestens einen Wärmetauscher (23) umfasst, der sich zwischen dem Einlasskanal (18) und dem Auslasskanal (21) erstreckt, um die Wärmeenergie, die von dem verarbeiteten Material während seines Durchlaufens zwischen der Verarbeitungskammer (8) und dem Auslass (22) der Solaranlage (1) freigesetzt wird, auf den Einlasskanal (18) zu übertragen, durch den das Rohmaterial vor der Verarbeitung läuft.

2. Solaranlage (1) nach Anspruch 1, **dadurch gekennzeichnet, dass** die Mittel zum Konzentrieren und Diffundieren (6) mindestens einen Wärmeabsorber (60) umfassen, der am Konvergenzpunkt (5) angeordnet ist, wobei einerseits der Wärmeabsorber (60) die Wärmeenergie der reflektierten Sonnenstrahlen (7) absorbiert und andererseits der mindestens eine Wärmeabsorber (60) die Wärmeenergie der reflektierten Sonnenstrahlen (7) an die Verarbeitungskammer (8) diffundiert, die in Kontakt mit dem mindestens einen Wärmeabsorber (60) angeordnet ist.

3. Solaranlage (1) nach Anspruch 1, **dadurch gekennzeichnet, dass** die Mittel zum Konzentrieren und Diffundieren (6) mindestens eine Öffnung in einer Wand (9, 90, 91, 92) der Verarbeitungskammer (8) umfassen, wobei das Reflexionssystem (2) die reflektierten Sonnenstrahlen (7) so auf diese Öffnung richtet, dass ein Konvergenzpunkt (5) entsteht, der sich an der Öffnung der Verarbeitungskammer (8) befindet.

4. Solaranlage (1) nach einem der Ansprüche 1 bis 3, **dadurch gekennzeichnet, dass** die Verarbeitungskammer (8) mindestens einen Gasbrenner umfasst.

5. Solaranlage (1) nach einem der Ansprüche 1 bis 4, **dadurch gekennzeichnet, dass** sie eine Rohmaterialquelle umfasst, die den Förderer speist, wobei die Rohmaterialquelle stromaufwärts von einem Einlass (11) der Verarbeitungskammer (8) angeordnet ist.

6. Solaranlage (1) nach einem der Ansprüche 1 bis 5, **dadurch gekennzeichnet, dass** das Reflexionssystem (2) mindestens einen oder mehrere optische Reflektoren (4) umfasst und/oder das Reflexionssystem (2) einen oder mehrere optische Konzentratoren umfasst.

7. Solaranlage (1) nach einem der Ansprüche 1 bis 6, **dadurch gekennzeichnet, dass** sie durch eine Isolierschicht (24) thermisch isoliert ist.

8. Solaranlage (1) nach einem der Ansprüche 1 bis 7, **dadurch gekennzeichnet, dass** sie eine Folge von Wärmetauschern (23) umfasst, die in regelmäßigen Abständen zwischen der Verarbeitungskammer (8) und dem Auslass (22) der Solaranlage (1) angeordnet sind.

9. Solaranlage (1) nach Anspruch 8, wobei sich jeder Wärmetauscher (23) zwischen einem ersten Punkt, der in dem Auslasskanal (21) angeordnet ist, und einem zweiten Punkt, der in dem Einlasskanal (17) angeordnet ist, erstreckt.

10. Verfahren zum Verarbeiten von Rohmaterial unter Verwendung einer Solaranlage (1) nach einem der Ansprüche 1 bis 9, **dadurch gekennzeichnet, dass** es umfasst:
- einen Schritt des Reflektierens einfallender Sonnenstrahlen auf mindestens einen Konvergenzpunkt (5);
- einen Schritt des Erhöhens der Temperatur einer Verarbeitungskammer (8), die mit Mitteln zum Konzentrieren und Diffundieren (6) der reflektierten Sonnenstrahlen (7) zusammenwirkt;
- einen Schritt des Beförderns eines Rohmaterials von außerhalb der Solaranlage (1) zur Verarbeitungskammer (8), wobei das Rohmaterial über einen Förderer (10) transportiert wird;
- einen Schritt des allmählichen Vorwärmens des Rohmaterials während des Beförderns zur Verarbeitungskammer (8);
- einen Schritt des Verarbeitens des Rohmaterials in der Verarbeitungskammer zur Erzeugung von verarbeitetem Material; und
- einen Schritt des Austragens des verarbeiteten Materials aus der Verarbeitungskammer (8) zur Außenseite des Solarofens (21) über den Förderer (10).

## Claims

1. Solar plant (1) comprising:
- a reflection system (2) designed to reflect and direct incident solar rays (3) toward at least one convergence point (5),
- means for concentrating and diffusing (6) the solar rays reflected (7) by the reflection system (2),
- a processing chamber (8) which cooperates with the concentration and diffusion means (6) which diffuse the heat energy from the reflected solar rays (7) to the processing chamber (8),
- an inlet duct (17) which extends from an inlet (18) of the solar plant (1) to the processing chamber (8),
- an outlet duct (21) which extends from the processing chamber (8) to an outlet (22) of the solar plant (1),
- a conveyor (10) which extends from the inlet (18) to the outlet (22) and passes through the processing chamber (8), the conveyor (10) transports raw material from the inlet (18) to the outlet (22), whereby the raw material transiently passes through the processing chamber (8) to obtain processed material, **characterized in that** it comprises at least one heat exchanger (23) which extends
between the inlet duct (18) and the outlet duct (21) so as to transfer the heat energy released by the processed material during its transit between the processing chamber (8) and the outlet (22) of the solar plant (1), to the inlet duct (18) in which the raw material passes before processing.

2. Solar plant (1) according to claim 1, **characterized in that** the concentration and diffusion means (6) comprise at least one heat absorber (60) which is arranged at the convergence point (5) and, on the one hand, the heat absorber (60) absorbing the heat energy from the reflected solar rays (7) and, on the other hand, the at least one heat absorber (60) diffusing the heat energy from the reflected solar rays (7) to the processing chamber (8) which is arranged so as to be in contact with the at least one heat absorber (60).

3. Solar plant (1) according to claim 1, **characterized in that** the concentration and diffusion means (6) comprise at least one opening in a wall (9, 90, 91, 92) of the processing chamber (8), the reflection system (2) directing the reflected solar rays (7) toward this opening so as to create a convergence point (5) at the opening of the processing chamber (8).

4. Solar plant (1) according to any of claims 1 to 3, **characterized in that** the processing chamber (8) comprises at least one gas burner.

5. Solar plant (1) according to any of claims 1 to 4, **characterized in that** it comprises a source of raw material feeding the conveyor, the source of raw material being arranged upstream of an inlet (11) of the processing chamber (8).

6. Solar plant (1) according to any of claims 1 to 5, **characterized in that** the reflection system (2) comprises at least one or more optical reflector(s) (4) and/or the reflection system (2) comprises one or more optical concentrators.

7. Solar plant (1) according to any of claims 1 to 6, **characterized in that** it is thermally insulated by an insulating coating (24).

8. Solar plant (1) according to any of claims 1 to 7, **characterized in that** it comprises a succession of heat exchangers (23) arranged at regular intervals between the processing chamber (8) and the outlet (22) of the solar plant (1).

9. Solar plant (1) according to claim 8, each heat exchanger (23) extending between a first point arranged in the outlet duct (21) and a second point arranged in the inlet duct (17).

10. Method for processing raw material using a solar plant (1) defined according to any of claims 1 to 9, **characterized in that** it comprises:
- a step of reflecting the incident solar rays in the direction of at least one convergence point (5);
- a step of raising the temperature of a processing chamber (8) which cooperates with means for concentrating and diffusing (6) the reflected solar rays (7);
- a step of conveying raw material from outside the solar plant (1) to the processing chamber (8), the raw material being transported by means of a conveyor (10);
- a step of progressively preheating the raw material during the conveyance to the processing chamber (8);
- a step of processing the raw material within the processing chamber, thereby producing processed material; and
- a step of discharging the processed material from the processing chamber (8) to the outside of the solar furnace (21) via the conveyor (10).
